# EUROPEAN PATENT APPLICATION

(11) **EP 0 702 178 A1**
(43) Date of publication of application: **20.03.1996**
(21) Application number: 95202505.4
(22) Date of filing: 15.09.1995
(51) Int. Cl.: F16K 37/00

(54) **Position indicator for indicating the position of a valve**

(30) Priority: 16.09.1994 NL 9401508
(71) Applicant: Industrieel Centrum Zaandam, NL-1508 EE Zaandam (NL)
(72) Inventor: Kok, Johan, NL-2611 NK Delft (NL)
(74) Representative: de Bruijn, Leendert C.

(57) **Abstract**

The invention concerns a position indicator for the indication of the position of a valve, comprising a housing, fixable with respect to the ground, with a ring-shaped element (15) which is centrally fixable around the operating pivot of the valve, wherein the housing further comprises indication means (10), which on rotation of the ring-shaped element with respect to the housing are moved along a circular path. The indication means comprise a circular guide (17) rotatably mounted in the housing, upon which at least two runners (19,20,21) are displaceably mounted, which are fixed to the guide by means of detent means. The ring-shaped element (15) is in driving connection (26) with the circular guide (17), and a transparent window is mounted in the housing such that the passage of a runner can be seen from the outside of the housing. The runners can be of magnetic or magnetizable material, and are releasable from and movable with respect to the guide from outside the housing with the aid of a magnetic force.

## Description

The present invention concerns a position indicator for the indication of the position of a valve, comprising a housing, fixable with respect to the ground, with a ring-shaped element which is centrally fixable around the operating pivot of the valve, wherein the housing further comprises indication means, which on rotation of the ring-shaped element with respect to the housing are moved along a circular path.

Valves are widely used for closing and opening pipelines. However, when such a valve is mounted in a pipeline, the position of the valve can no longer be determined. It is no longer possible to see from outside whether the valve is open, closed or in an intermediate position. This can clearly lead to problems. During closure of valves, such as for example butterfly valves, in large transport pipelines and/or in transport pipelines in which a fluid, particularly a liquid, is transported under high pressure, the problem arises that the last phase of closure of the valve must be performed slowly and carefully, that is, the valve must be slowly rotated to the closed position, otherwise elsewhere in the pipeline network failures, etc., can arise through, for example, so-called water hammer effects.

In the event of unexpected calamities, often one or more valves must be rotated to the closed position which in such an emergency situation must be done in general at as fast a speed as possible. In particular, in such events it is of great importance that personnel are warned in time before reaching the last phase in the closure of the valve. For otherwise there is a high risk that the calamity will be worsened through further pipeline failures.

The above problems are already recognized and have resulted in a development of so-called position indicators or notifiers for open/closed signalling of a valve. However, the position indicators previously disclosed by the prior art have the following disadvantages:
- they often comprise vulnerable electronic components;
- they often comprise complicated, complex mechanical systems;
- they are very expensive (prices of Nlg 800. - and higher are normal);
- they are valve-dependent or they can be adapted to a number of valves by means of exchangeable gear-wheels.

These problems have had the result that such position indicators have, up to now, not been widely used, only in valves deemed very important.

The present invention has the object, inter alia, of overcoming the above problems. The invention has in particular the object of providing a universal position indicator which is applicable to a wide variety of valves, which functions reliably, which can be easily adapted to different valves, and which can be easily read.

This object is achieved in accordance with the invention in that the indicating means comprise a circular guide rotatably mounted in the housing, upon which at least two runners are displaceably mounted, which can be locked to the guide by means of detent means, in that the ring-shaped element is in driving connection with the circular guide, and in that the housing is provided with a reference point, such as a transparent window arranged in the housing, such that the passage of said runner(s) can be seen from the outside of the housing. During rotation of the operating pivot, the circular guide is driven in a rotational manner by the ring-shaped element fixed to it. The runners, which are locked to the guide, will then be moved, wherein the passage of these runners past a reference point, such as a window, can be seen from the outside of the housing. The adaption of the position indicator in accordance with the invention to different valves is achieved in a simple manner by closing the valve completely and moving one of the runners, the so-called "closed runner", along the circular guide until it is located at a particular reference point on the housing, and then locking it to the guide at this reference point. The valve is then put in its completely open position and the second runner, the so-called "open runner", is moved along the guide until it is located at the previously mentioned reference point on the housing, after which the second runner is locked to the guide.

When the operating pivot of the valve is now rotated, the circular guide will be moved with respect to the fixed reference point on the housing. In this way the runners, adjusted to the correct positions, will move towards or away from the reference point and thus provide an indication of the position of the valve. In particular, when the transparent window extends over only a small portion of the circular guide track, it can be advantageous to install one or more extra runners on the guide. In particular in this respect, an extra runner can be considered which is positioned in the opening direction in close proximity to the "closed runner". Such a runner positioned in close proximity to the "closed runner" provides a timely warning of the approach of the closed position, so that the operator of the valve can slowly and carefully rotate the valve to the closed position during the last phase of closure. The position indicator in accordance with the invention is applicable to many types of valves, shut-off valves, etc.

It is in accordance with the invention particularly advantageous when the runners comprise a magnetic or magnetizable material, and are releasable from and movable with respect to the guide from outside the housing with the aid of a magnetic force. In this manner, it is possible to adapt the position indicator to different types of valves without opening the housing. In this respect, it is particularly advantageous when the runners comprise a magnetizable material. The runners can then be moved by bringing a magnet of sufficient strength up to the outside of the housing, and with this the runners containing magnetizable material (that is, a material which is attracted by magnetic forces, such as iron or steel) can be moved along the guide. In this manner, unintentional movement of the runners is prevented. In any case, a magnet should be kept near the housing for the movement of the runners. When the runners comprise a magnetic material, there is a risk of unintentional displacement, when, for example, an iron or steel tool is used.

According to a preferred embodiment, the detent means comprise detent projections and detent cavities which are capable of being interlocked with each other, wherein on the one hand the detent projections or detent cavities, respectively, extend as a series over the guide in its circumferential direction, and wherein on the other hand each runner comprises at least one detent projection or at least one detent cavity, respectively. It will be clear that the series of detent cavities or detent projections does not need to extend over the whole of the guide. Such detent means can be easily installed and are reliable in their functioning.

It is here further advantageous when the position indicator comprises spring means, which apply a force to the runners which must be overcome in order to release them. This spring force can, for example, be overcome by means of a magnet and ensures that the runners are retained in their locked position, once they are positioned at a particular place on the guide.

According to a preferred embodiment, the spring means are spring lips formed as a unit with the runners. Each runner has, in this case, at least one spring lip. Such spring lips, integrated with the runners, can be produced simply, for example by manufacturing the runner as an injection moulded component.

The spring lips are advantageously provided with a spring projection at their free end, wherein the spring projection is positioned on the side of the runner opposite to the detent projection such that this spring projection bears against the housing. Such a spring projection ensures contact of the spring lip with the housing for the maintenance of a spring force to be overcome for release, whilst still enabling the use of springing in a compact construction of the position indicator as a whole.

In order to ensure a long period of locking of the spring lips, it is in accordance with the invention advantageous when the spring lip is, in general, unstressed in the locked position. The spring force is then only generated during the release and movement of the spring lip along the guide. Because this is an action which only occurs during a limited, and in general short, time period, the spring action of the spring lip will not be worsened by ageing of the material under the influence of the material stresses generated by the spring force.

The housing in accordance with the invention can be hermetically sealed off from the outside. This is in particular possible since the housing does not need to be opened for adaptation to different types of valves. Thus, only a good seal between the ring-shaped element and the housing needs to be ensured. Such a seal can be reliably produced industrially by means of, for example, an O-ring. An hermetic seal is of great importance, for example, in shut-off valves for water pipes. Penetrating moisture could freeze and impede the functioning of the position indicator.

In accordance with an advantageous embodiment, the driving connection between the ring-shaped element and the circular guide comprises at least one gear train transmission. Such a gear train transmission enables the rotational speed of the circular guide to be reduced with respect to the rotational speed of the ring-shaped element. In this way it is possible to ensure that the "closed runner" and "open runner" only come round to the reference point on the housing when the valve is completely closed or open respectively. Interim passing of the reference point by one of these runners is thus excluded so that no mistakes are possible.

The gear train transmission preferably comprises a gear ring attached to the circular guide, a gear ring attached to the ring-shaped element, and at least one gear-wheel connected between these gear rings. Here the so-called gear rings form the first and last gear-wheels of the transmission, whilst the intermediate gear-wheel can provide the reduction in the number of revolutions.

It is in accordance with the invention particularly advantageous when the gear ring attached to the ring-shaped element has one tooth or possibly a pair of teeth, which is or are, respectively, positioned in such a way that a so-called "revolution counter" is provided. The circular guide is then rotated in a stepwise manner over a small distance when a tooth of the gear ring attached to the ring-shaped element contacts or strikes the intermediate gear-wheel.

It is advantageous here when the at least one tooth of the gear ring attached to the ring-shaped element is a gear-wheel tooth with a truncated and rounded-off top. Through this truncation and rounding off, some freedom is obtained in the positional accuracy of the intermediate gear-wheels with respect to the ring-shaped element.

It is according to the invention further advantageous here when during the rotation of the gear-wheel driven by the gear ring attached to the ring-shaped element, this gear-wheel is braked by frictional means. Frictional means here prevent the guide from being turned too far as a result of the impulse given by the tooth of the ring-shaped element. These frictional means can comprise, for example, an O-ring, which is in frictional contact with the gear-wheel driven by the tooth of the ring-shaped element. In practice, it has been found to be advantageous to use a rubber O-ring here and to smear this lightly with a lubricant.

The invention further relates to a support collar comprising a collar encircling an opening, wherein the surface of the opening is in the main built up from two isosceles triangles with their bases turned towards each other, and wherein two registering, opposing threaded holes are formed, wherein the centre lines of the holes extend parallel to and centrally between the bases of the triangles. Such a support collar can be easily centred on shafts having an arbitrary symmetrical cross-section by means of bolts screwed into the holes, in which the only requirement is that this shaft passes through the opening surrounded by the encircling collar.

In accordance with an advantageous embodiment, the surface of the opening further comprises a generally rectangular area positioned between the bases. Such a rectangular area improves the canting freedoms for centring of the support collar on the shaft.

Such a support collar permits very general application, thus also separate from the position indicator, for centring of items on arbitrary shafts, bars, rods, etc.

Through a combination of a position indicator and a support collar in accordance with the invention a very universal unit, applicable to different valves, is obtained in accordance with the invention. For the fixation of the position indicator, the support collar and the ring-shaped element are hereby provided with interlocking means, which can interlock with each other for fixation of the ring-shaped element on the support collar.

The invention will now be further clarified in the following by means of an examplary embodiment shown in drawing form, in which:
Fig. 1 shows in part sectional view a position indicator in accordance with the invention, which is mounted on an operating pivot of a water stop cock or shut-off valve situated in an access chamber in the road;
Fig. 2 shows schematically an open-plan view of a position indicator according to the invention;
Fig. 3 shows a perspective view of a runner for a position indicator according to the invention;
Fig. 4, in a schematic detail, shows the movement of a runner by means of magnetic force, wherein
Fig. 4a shows the locked position of the runner and
Fig. 4b the unlocked position of the runner achieved by the application of a magnetic force;
Fig. 5 shows a perspective view of a support collar according to the invention;
Fig. 6 shows a schematic view of the centring of a support collar according to the invention; and
Fig. 7 shows a schematic view of the fixation of a position indicator according to the invention by means of a support collar in accordance with the invention.

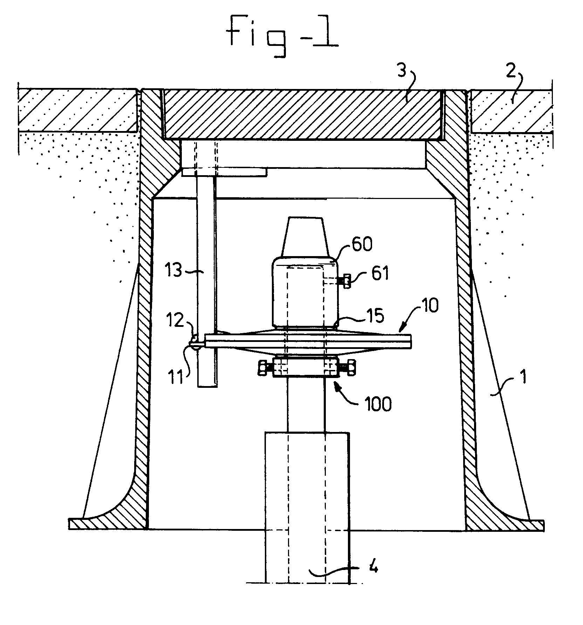

Fig 1 shows an access chamber 1 located in the road 2, which is closed by a cover 3. An operating pivot 4 of a water shut-off valve projects from the ground in the access chamber 1. A position indicator 10 is fastened to the operating pivot 4 by means of a support collar 100. The position indicator 10 is attached to the so-called cover bolt 13 by means of two eyes 11 attached to the position indicator 10 and a cable 12 passing through said eyes 11. Said cover bolt 13 is in turn attached to the access chamber 1 in order to enable the cover 3 to be attached to the access chamber 1. Through the attachment of the position indicator 10 to the cover bolt 13, the housing 16 of the position indicator 10 can be fixed with reference to the ground. It will be clear that the housing 16 of the position indicator 10 can also be fixed in many other ways reletive to the ground. A so-called spindle cap 60 is positioned on top of the operating pivot 4. This spindle cap serves on the one hand as a point of action for an operating tool and on the other hand as a means of fixing to retain the position indicator 10 between the support collar 100 and the spindle cap 60. The spindle cap 60 is provided with a bolt 61 for fastening to the operating pivot 4.

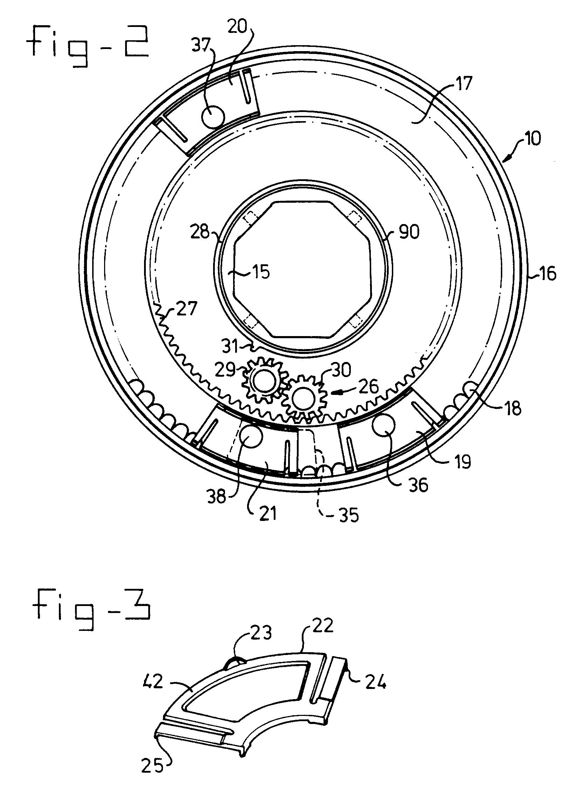

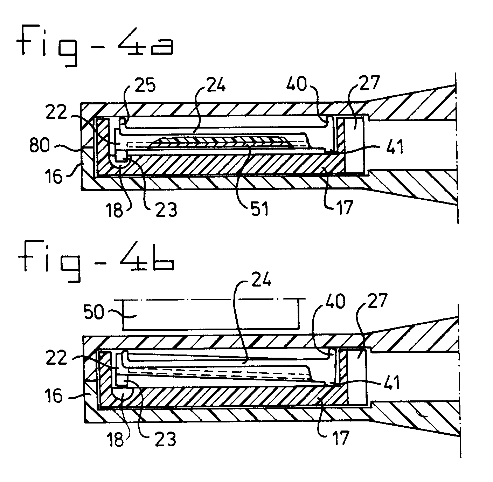

Fig 2 shows an opened position indicator 10 in accordance with the invention in a schematic plan view. The position indicator 10 comprises a ring-shaped element 15 which is fixable around the operating pivot 4 of a valve. During opening and closing of the valve, the ring-shaped element 15 will rotate together with the valve as a result of its fixation to the operating pivot 4. The position indicator 10 further comprises an essentially disc-shaped housing 16 within which a circular guide 17, also referred to as a guide track, is rotatably mounted. This guide track 17 is provided over its complete circumference with a series of detent cavities 18. This guide track 17 is essentially U-shaped and provided with a number of runners 19, 20, 21. These runners are elements, one of which is shown in perspective view in Fig. 3 where the underside of said runner 22 can be seen, which are movable over the guide track 17. As can be seen in Fig. 3, the runners are provided with a detent projection 23, which can interlock in each arbitrary detent cavity 18 of the series of detent cavities. It will be clear that the runners 19, 20, 21, 22 can be attached in any arbitrary location of the guide track 17 by interlocking of the detent projections 23 in a detent cavity 18. In order to be able to maintain this attachment by interlocking, the runners are provided with spring lips 24 having a spring projection 25 on their free end. The function of these spring lips and spring projections will later be clarified with reference to Fig. 4.

A transmission system 26 is arranged between the ring-shaped element 15 and the guide track 17. This transmission 26 comprises a gear ring 27 attached to the guide track 17, a gear ring 28 attached to the ring-shaped element 15, and two gear-wheels 29 and 30 arranged between them. The gear ring 28 attached to the ring-shaped element 15 has one tooth 31, which essentially has the form of a gear tooth of which the top is truncated and rounded off.

When, during rotation of the operating pivot, the tooth 31 passes the gear-wheel 29, this gear-wheel 29 is rotated over a predetermined angular distance, whereupon the gear-wheel 30 is rotated in the opposite direction. The gear-wheel 30 in turn rotates guide track 17 in the same direction as the direction of rotation of the operating pivot 31. Depending on the diameter ratios of the gear rings and gear-wheels, for example, 40 to 120 revolutions of the operating pivot need to be performed before the guide track 17 is rotated through 360°.

It will be clear that during rotation of the guide track 17 the runners 19, 20 and 21 also rotate, and that the passage of these runners past a fixed reference point of the housing 16 of the position indicator 10 can provide an indication of the open and closed state of the valve. As a fixed reference point, for example, a transparent window 35, schematically indicated by dotted lines, can be used in the upper side of the housing 16 of the position indicator. When the runner 19 is under the window 35, the valve is in its closed position. This runner 19 is consequently called the "closed runner". When the runner 20 is under the window 35, the valve is in its fully open position. Consequently, this runner 20 is referred to as the "open runner". Moreover, an extra runner 21 is provided which is positioned directly in front of the so-called "closed-runner". When this extra runner 21 comes under the window during closure of the valve, this means that the final phase is approaching in which the valve must be carefully and gradually rotated to the closed position.

So that the runners are at all times clearly visible, including in deep and dark access chambers, it is in accordance with the invention advantageous when these runners are provided with fluorescent colours. The "closed runner" can therefore be provided with, for example, a red fluorescent spot 36, the "open runner" can be provided with, for example, a green fluorescent spot 37 and the extra runner 21 can be provided with, for example, an orange fluorescent spot. However, larger fluorescent surfaces, possibly with preferably black pictograms, are very advantageous when the position indicator is used under poor lighting conditions. This combination of colours corresponds to the colours normally used in traffic lights such that their meaning is established in an obvious way.

Fig. 4 shows schematically in cross-section a runner in the locked position (Fig. 4a) and the released position (Fig. 4b).

Fig. 4a shows a cross-sectional detail of a position indicator in accordance with the invention. A runner 22 is situated in the U-shaped guide track 17 where it is held by its detent projection 23 engaging a detent cavity 18 formed in the guide track 17. Furthermore, as previously indicated, the runner 22 is provided with a spring lip 24 having a spring projection 25 at its free end. This spring projection 25 rests against the inside of the top of the housing 16. The runner 22 is, furthermore, supported with a projection 40 against the inside of the top of the housing 16 and with a projection 41 on the guide track 17. To release the runner 22, its body 42 needs to be lifted up, such that the detent projection 23 comes out of the detent cavity 18. For this the spring force provided by the spring lip 24 needs to be overcome. This spring lip 24 therefore provides contact pressure for the runner in its locked position.

Fig. 4b shows the runner 22 in its released position. In order to be able to bring the runner 22 into its released position, a magnet 50 of sufficient strength is placed on top of the housing. This magnet lifts up the body 42 of the runner against the spring force of the spring lips 24, since a small plate 51 of a magnetizable material, such as iron or steel, is located in the runner 22. It will be clear that the runner 22 can be moved to another position on the guide track by moving the magnet 50 over the housing along the guide track 17, where it can be locked by taking the magnet 50 away.

The runners 19, 20, 21 can be positioned in an arbitrary location on the guide track 17 in this manner, such that the position indicator in accordance with the invention can be applied to any arbitrary valve.

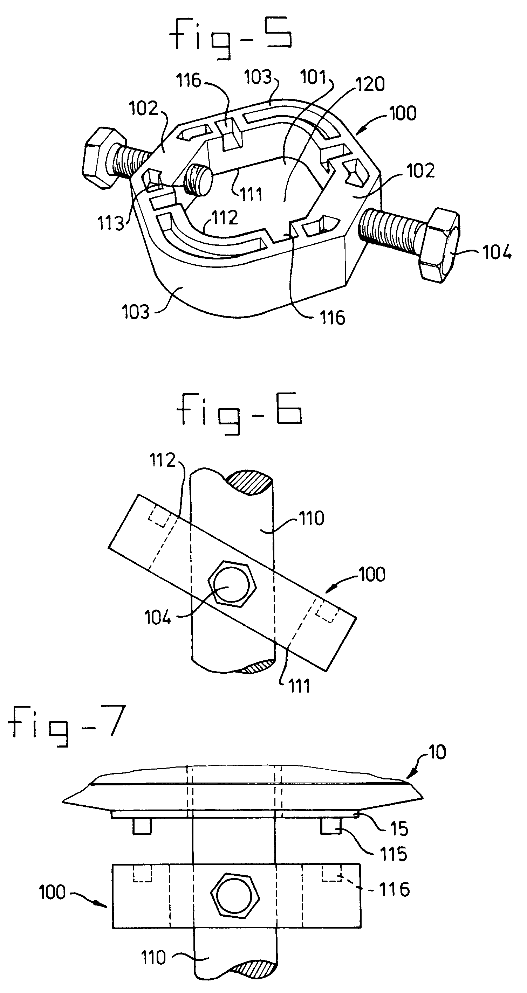

Fig 5 shows a support collar in accordance with the invention. This support collar 100 encloses an opening 102, which can be regarded as being built up from two isosceles triangles 103 with their bases turned towards each other, and wherein between the bases a rectangular area 120 is included. The rectangular area 120 has here long sides bordered by the bases and two short sides bordered by bodies 102. In the opposingly facing bodies 102 are provided registered and threaded holes 113, into which bolts 104 are screwed. The apexes of the triangles 103 are rounded off, but can also be pointed. The rounding is beneficial in regard to the accommodation of material stresses.

Fig. 6 shows schematically the installation and centring of a support collar 100 according to the invention on a shaft 110. The support collar 100 is here, as shown, placed at an angle such that the edge 111 and the edge 112 are in contact with the shaft 110. In this position, it is ensured that the centre lines of the bolts 104, which extend centrally between the bases of the triangles 103, intersect the centre line of the shaft 110 at right angles. When the bolts 104 have been tightened sufficiently, the support collar 100 can be rotated to a position perpendicular to the shaft 110, as is shown in Fig. 7. An article, such as a position indicator 10, can then be located over the shaft 110. For fixing of the ring-shaped element 15 on the shaft 110, the ring-shaped element is provided with projections 115 which locate in corresponding cavities 116 in the support collar 100.

It will be clear that many variants of the position indicator and support collar in accordance with the invention are conceivable. Thus it is, for example, possible to provide a series of detent projections over the circumference of the guide track 17, and to provide each of the runners with at least one detent cavity. Furthermore, a number, for example, two, three or four of gear train transmissions 26 can be provided, which are preferably distributed at equally spaced angular positions in the housing 16. The housing 16 is preferably assembled from two halves which are sealed together at their joint 80, for example by fusion welding. The housing 16 and the ring-shaped element 15 can be further hermetically sealed with respect to each other by means of an O-ring 90.

## Claims

1. Position indicator for the indication of the position of a valve, comprising a housing, fixable with respect to the ground, with a ring-shaped element which is centrally fixable around the operating pivot of the valve, wherein the housing further comprises indication means, which on rotation of the ring-shaped element with respect to the housing are moved along a circular path, **characterized**
in that the indication means comprise a circular guide which is rotatably mounted in the housing, upon which at least two runners are displaceably mounted, wherein the runners are lockable on the guide by detent means,
in that the ring-shaped element is in driving connection with the circular guide, and
in that the housing is provided with a reference point, such as a transparent window arranged in the housing, such that the passage of said runner(s) can be seen from the outside of the housing.

2. Position indicator according to Claim 1, **characterized** in that the runners comprise a magnetic or magnetizable material, and are releasable from and movable with respect to the guide from outside the housing with the aid of a magnetic force.

3. Position indicator according to Claim 2, **characterized** in that the runners contain magnetizable material.

4. Position indicator according to one of the preceding claims, **characterized** in that the detent means comprise detent projections and detent cavities which are capable of being interlocked with each other, wherein on the one hand the detent projections or detent cavities, respectively, extend as a series over the guide in its circumferential direction, and wherein on the other hand each runner comprises at least one detent projection or detent cavity, respectively.

5. Position indicator according to Claim 4, **characterized** in that the position indicator comprises spring means which exercise a force on the runners which must be overcome in order to release them.

6. Position indicator according to Claim 5, **characterized** in that the spring means are spring lips formed as a unit with the runners.

7. Position indicator according to Claim 6, **characterized** in that the spring lips are provided with a spring projection at their free end, wherein the spring projection is arranged on the side of the runner opposite to the detent projection such that this spring projection bears against the housing.

8. Position indicator according to Claim 6 or 7, **characterized** in that the spring lip is, in general, unstressed in the locked position.

9. Position indicator according to one of the preceding claims **characterized** in that the guide has a principally U-shaped cross-section, and in that the runners have a circular arc form, and fit in the circular U-guide.

10. Position indicator according to one of the preceding claims, **characterized** in that the housing is hermetically sealed off from the outside.

11. Position indicator according to one of the preceding claims **characterized** in that the driving connection between the ring-shaped element and the circular guide comprises at least one gear train transmission.

12. Position indicator according to Claim 11, **characterized** in that the gear train transmission comprises a gear ring attached to the circular guide, a gear ring attached to the ring-shaped element, and at least one gear-wheel connected between these gear rings.

13. Position indicator according to Claim 12, **characterized** in that the gear ring attached to the ring-shaped element has one tooth.

14. Position indicator according to Claim 13, **characterized** in that the one tooth of the gear ring attached to the ring-shaped element is a gear-wheel tooth with a truncated and rounded-off top.

15. Position indicator according to one of Claims 13-14, **characterized** in that during rotation of the gear-wheel driven by the gear ring attached to the ring-shaped element, this gear-wheel is braked by frictional means.

16. Position indicator according to Claim 15, **characterized** in that the frictional means comprise an O-ring.

17. Support collar comprising a collar encircling an opening, wherein the surface of the opening is in the main built up from two isosceles triangles with their bases turned towards each other, and wherein in the collar are formed two opposing and registering threaded holes are formed, wherein the centre lines of the holes extend parallel to and centrally between the bases of the triangles.

18. Support collar according to Claim 17, wherein the surface of the opening further comprises a generally rectangular area positioned between the bases.

19. Support collar according to one of Claims 17-18, wherein the threaded holes are provided with correspondingly threaded bolts.

20. Combination of position indicator according to one of Claims 1-16 and support collar according to one of Claims 17-19, wherein the support collar and the ring-shaped element are provided with interlocking means, which can interlock with each other for fixation of the ring-shaped element on the support collar.
